(19) Europäisches Patentamt
European Patent Office
Office européen des brevets

(11) Publication number: **0 131 832**
**B1**

# (12) EUROPEAN PATENT SPECIFICATION

(45) Date of publication of patent specification: **20.05.87**

(51) Int. Cl.[4]: **C 08 F 10/00,** C 08 F 4/02

(21) Application number: **84107651.6**

(22) Date of filing: **02.07.84**

## (54) Olefin polymerization catalysts adapted for gas phase processes.

(30) Priority: **01.07.83 US 510216**

(43) Date of publication of application:
**23.01.85 Bulletin 85/04**

(45) Publication of the grant of the patent:
**20.05.87 Bulletin 87/21**

(84) Designated Contracting States:
**AT BE CH DE FR GB IT LI NL SE**

(56) References cited:
**EP-A-0 011 308**
**GB-A- 883 520**
**US-E- 28 361**

**CHEMICAL ABSTRACTS, vol. 91, no. 14, October 1979, page 18, no. 108479f, Columbus, Ohio, US**

(73) Proprietor: **UNION CARBIDE CORPORATION**
**39 Old Ridgebury Road**
**Danbury Connecticut 06817 (US)**

(72) Inventor: **Gross, Laurence Herbert**
**999 Buxton Road**
**Bridgewater New Jersey 08807 (US)**
Inventor: **Noshay, Allen**
**66 Wellington Road**
**East Brunswick New Jersey 08816 (US)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

**EP 0 131 832 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Field of the invention

This invention relates to olefin polymerization catalysts that are adapted for use in low pressure gas phase polymerization processes. More particularly this invention relates to such catalysts as are adapted for use in low pressure gas phase fluidized bed olefin polymerization processes.

### Background of the invention

Transition metal base olefin polymerization catalysts, when first developed, were employed under low pressure conditions in solvents or liquid diluents under solution or slurry polymerization process conditions. Later advances in the art of olefin polymerization technology allowed some of such catalysts to be used in low pressure gas phase processes which employed very little, if any, solvent or liquid diluent. In order to be used in such low pressure gas phase processes the various types of catalysts had to be adapted in various ways so as to allow them to function catalytically in a practical manner in these new processes. Although various catalyst modification techniques have been employed, such as the use of various types of supports, for facilitating the use of these catalysts in the various types of gas phase processes, it has been found necessary to further modify the known components of these catalyst systems to enable such catalyst systems to be used in a facile manner in fluidized bed processes in order to provide currently desired commercial results in the polymer products.

U.S. Patents 4,048,415; 4,135,045 and 4,296,222 disclose that olefin polymerization catalyst components that may be used under low pressure conditions may be ball milled or micropulverised to provide useful forms of transition metal based catalysts without the use of supports for the catalysts. U.S. 3,718,635 discloses the use of a ball milled supported low pressure olefin polymerization catalyst which has been supported on certain metal oxide supports. The catalysts of these patents are all intended to be used in the presence of inert solvent or liquid diluent.

Canadian Patent 1,144,300 discloses the preparation of ball milled olefin polymerization catalysts in the presence of magnesium halide supports. Inorganic and organic diluents such as silica and polyethylene may be added during or after the ball milling step. These catalyst systems are intended for use in a low pressure gas phase fluidized bed process.

Catalyst systems prepared by these ball milling or micropulverizing procedures, with inorganic or organic support or diluent materials, however, have disadvantages with respect to the use of such catalyst systems in low pressure gas phase polymerization processes, and more particularly with respect to those catalyst systems that are to be used in a fluid bed process in that the morphology of these catalyst systems, i.e., their particle size and shape, makes them difficult to feed into the reactor in dry bulk form and also to fluidize them in the reactor. These feeding and fluidizing problems can lead to the formation of sheets and chunks of polymer in the reactor itself and/or in the gas recycle lines which can disrupt the continuous operation of the reactor due to the plugging of inlet, recycle, and outlet pipelines. The polymers produced with such catalysts are also likely to be of low bulk density due to an irregular particle shape and a relatively small particle size. These characteristics of such polymers can also contribute to the fouling of the reactor lines with sheets and/or chunks of polymer.

U.S. 3,515,684 discloses the preparation of fluidizable cracking catalysts by agglomerating, in a high speed bladed mixing device, very finely divided particles of a zeolite/water composition with an oily liquid. The resulting agglomerated product is a dispersion, in oil, of zeolite particles of about 15—150 µm in size. These particles, however, have to be recovered from the oil and further processed before being used as catalyst materials in a cracking process.

U.S. Reissue Patent 28361 discloses the use of a high speed bladed finisher for the purposes of preparing masterbatches of pigmented polymers, including polyethylene and polypropylene.

None of these references teach the use of a high speed bladed finishing device for the preparation of olefin polymerization catalysts that are particularly adapted for use in a low process gas phase polymerization process.

U.S. Patent 3,990,993 discloses a process for depositing fine particle sized olefin polymer catalysts on web like submicroscopic fibrous structures of polymeric supports such as polytetrafluoroethylene and polyethylene, by the use of compressive shearing action in various types of mixing devices. No details are given with respect to the utility of such catalyst systems in a gas phase process. It would be expected that such supported catalyst systems would not be firmly supported on the polymeric webs and could be readily dislodged therefrom in a turbulent reaction medium such as in a gas fluidized bed process, and thus also produce operational problems due to polymer sheeting and chunking.

### Summary of the invention

The object of the present invention is to provide a means for adapting solid high activity transition metal based olefin polymerization catalysts for use in gas fluidized bed polymerization processes.

In accordance with the present invention it has now been found that solid low pressure high activity transition metal based olefin polymerization catalyst precursors can be readily adapted for use in a gas phase polymerization process for the purposes of significantly improving the use of such catalysts for extended continuous periods of time in the reactors by mixing particles of the catalyst precursor with

particles of an organic support material in a high speed bladed finishing device under such friction induced heat conditions as to cause the particulate support material to soften and the particulate catalyst precursor to become embedded in the softened support materials.

Description of the preferred embodiment

The catalyst components

The low pressure olefin polymerization catalyst systems of the present invention comprise a transition metal catalyst compound and an organometallic activating, or co-catalyst, compound. They may be more generally characterized as high activity Ziegler or Ziegler-Natta type catalyst systems.

By a "high activity" catalyst is meant either

a Ziegler catalyst system which is capable of producing, in an aliphatic hydrocarbon solvent slurry, or liquid monomer solution, polymerization process, ethylene homo- and/or copolymers at a level of productivity of the order of at least 200,000, and preferably of at least 500,000, pounds of resin per pound of transition metal (in the catalyst employed), or

a Ziegler-Natta sterospecific catalyst system which is capable of producing, in an aliphatic hydrocarbon solvent slurry, or liquid monomer solution, polymerization process, stereoregular olefin polymers at a level of productivity of the order of at least 100,000, and preferably of at least 300,000, pounds of resin per pound of transition metal (in the catalyst employed).

By "stereospecific catalyst" it is meant a catalyst system adapted to produce steroregular polymers, that is, olefin polymers having an isotacticity of at least 80, and preferably of at least 90%.

The transition metal compound is a Group IVa, Va or VIa metal compound. The transition metals are preferably Ti, V, Zr and Hf. The preferred transition metal catalyst compounds are the halides, more particularly the chlorides, oxyhalides and alcoholates of such compounds.

The compounds have the structure

$$M(OR)_aX_b$$

wherein

M is Ti, V, Zr or Hf,

R is a $C_1$ to $C_{14}$ aliphatic or aromatic hydrocarbon radical, or COR′ where R′ is a $C_1$ to $C_{14}$ aliphatic or aromatic hydrocarbon radical,

X is Cl, Br, I or mixtures thereof, a is 0 or 1, b is 2 to 4 inclusive and a+b is the valence of M and is usually 3 or 4 when M is Ti or V, and 4 when M is Zr or Hf.

The transition metal compounds can be used individually or in combinations thereof, and would include: $TiCl_3$, $VCl_3$, $TiCl_4$, $VCl_4$, $Ti(OCH_3)Cl_3$, $Ti(OC_6H_5)Cl_3$, $Ti(OCOCH_3)Cl_3$ and $Ti(OCOC_6H_5)Cl_3$, $ZrCl_4$ and $HfCl_4$.

These transition metal compounds may be used neat, where they are in solid form, or they may be converted to solid form by being complexed with support materials which form solid complexes with such transition metal compounds. Such complexing agents include Group IIA metal compounds, particularly those of magnesium such as MgO, $MgCl_2$, $MgBr_2$, $MgI_2$, MgOCl and mixtures thereof. Anhydrous $MgCl_2$ is the most preferred of such compounds.

The transition metal compounds, with or without the complexing support compounds, may also be used with an electron donor compound, which also forms a complex with the transition metal compounds. These electron donor compounds are known, as such, in the art, and also as Lewis Bases. They include esters, ethers, ketones, silanes and amines.

These esters, ethers, ketones, silanes and amines include such compounds as alkyl esters of aliphatic and aromatic carboxylic acids, aliphatic ethers and cyclic ethers, and aliphatic ketones. The silanes include polysiloxanes: alkoxy, aryloxy, alkylalkoxy and arylalkoxy silanes and halo derivatives of such silanes. The preferred silanes are phenyl trimethoxy silane and phenyl triethoxy silane. The amines include di- and polyamino compounds such as 1,2,4-trimethyl-piperazine; N,N,N′,N′-tetramethyl-ethylene diamine, N,N,N′,N′-tetraethyl-ethylene diamine; 2-dimethylamino-pyridine; N,N′-dimethyl-piperazine; ortho-phenylene-diamine; N,N′-dibenzyl-ethylenediamine; N,N′,N″-dibenzyl-ethylenediamine; and 2,3,N,N′-dimethyl-naphthylenediamine. The preferred amines include N,N,N′,N′-tetraethyl ethylene diamine. The preferable esters and ethers are alkyl esters of $C_1$ to $C_{10}$ saturated aliphatic carboxylic acids; alkyl esters of $C_7$ to $C_{15}$ aromatic carboxylic acids; $C_2$ to $C_8$, and preferably $C_3$ to $C_4$, aliphatic ethers, $C_3$ to $C_5$ cyclic ethers, and preferably $C_4$ cyclic mono- or di-ethers. The most preferred compounds would include ethyl anisate and tetrahydrofuran.

Up to 200, and preferably 10 to 80, mol of magnesium compound are used per mol of the complexes obtained by contacting the transition metal compound with the electron donor compound (hereinafter called ED compound).

Up to 3, and preferably 1 to 2, mol of ED compound are used per mol of transition metal compound.

The term "catalyst precursor" as used herein means the transition metal compound, alone, or in combination with the inorganic complexing type supports and/or the ED compound, but without either the organic supports discussed below, or a fully activating amount of the activator compound.

The level of productivity of these high activity catalysts is not significantly affected when these catalyst

systems are modified as disclosed herein, for use in fluid bed olefin polymerization processes. Without the catalyst modification disclosed herein, however, these high activity catalysts could not be used to attain such levels of productivity in these gas phase processes without significantly adversely affecting the extended continuous operation of the reactors in which they are employed.

The activator compounds are preferably organometallic compounds of Group Ia, IIa or IIIa metals and more preferably of Al, Zn, Cd or Mg. The most preferred compounds have the structure

$$Al(R'')_cX'_dH_e$$

wherein X' is Cl or OR''', R'' and R''' are the same or different and are $C_1$ to $C_{14}$ saturated hydrocarbon radicals, d is 0 to 1.5, e is 1 or 0 and c+d+e=3.

Such activator compounds can be used individually or in combinations thereof and would include $Al(C_2H_5)_3$, $Al(C_2H_5)_2Cl$, $Al(i\text{-}C_4H_9)_3$, $Al(C_2H_5)_3Cl_3$, $Al(i\text{-}C_4H_9)_2H$, $Al(C_6H_{13})_3$, $Al(C_8H_{17})_3$, $Al(C_2H_5)_2H$, $Al(C_2H_5)_2(OC_2H_5)$, $Zn(C_2H_5)_2$, $Cd(C_2H_5)_2$ and $Mg(C_2H_5)_2$.

10 to 400, and preferably about 50 to 150, mol of the activator compound are used per mol of the transition metal compound in activating the catalyst employed in the present invention.

Electron donor compounds, as described above, may also be used to form complexes with the activator compounds in order to enhance the stereospecificity of the Ziegler-Natta type sterospecific olefin polymerization catalysts. The electron donors and activators, in such cases, would be used in an activator/electron donor mol ratio of 0.5/1 to 20/1, and preferably of 1/1 to 5/1.

The organic support material

The organic support material used in preparing the catalyst systems of the present invention is a particulate polymeric hydrocarbon material. To facilitate its use in preparing the supported catalyst systems it should preferably have a melting point, or glass transition temperature, of about 70 to 170°C, and preferably of 90 to 140°C, an average particle size of 0.05 to 0.35 mm and a particle size distribution wherein not more than 10 weight % of the material has a particle size below 0.02 mm.

To facilitate the use of the supported catalyst system in a gas phase polymerization process, and more particularly in a fluidized gas phase process, the particulate support materials themselves, prior to having the catalyst precursor embedded thereon should preferably also have the following characteristics:

a density of about 0.9 to 1.5 g/cm$^3$,

a bulk density of about 0.08 to 0.56 g/cm$^3$, preferably 0.24 to 0.56 g/cm$^3$ 5 to 35, and preferably of about 15 to 35, lbs/ft$^3$) and

an external void volume of about 0.8 to 5.0 cm$^3$/g.

The external void volume is a measure of particle sphericity and packing efficiency.

Examples of polymeric organic support materials that may be used would include polyolefin resins, such as homo-, and co-polymers of $C_2$—$C_8$ monoolefins and polyenes, such as polyethylene, polypropylene, polybutene, poly-(4-methyl-pentene), polystyrene and polydienes, and copolymers of ethylene and propylene with each other or with $C_4$—$C_8$ monoolefins and/or polyenes.

The organic support material must be chemically inert to all of the components of the polymerization reaction system in which it is used. 50 to 95, preferably 60 to 95, and most preferably 65 to 90, weight % of the organic support is used with 5 to 50, preferably 5 to 40, and more preferably 10 to 35, weight % of the transition metal based catalyst precursor, in preparing the supported compositions of the present invention.

Process for making supported catalyst with organic support

The desired amounts of particulate polymeric hydrocarbon support and particulate transition metal based precursor composition are fed all at once, or continuously and gradually over a period of time, to a bladed, high speed finishing device. The finisher is, essentially a horizontal cylindrically shaped mixing chamber having a mixing volume of 1 to 150 liters, and has a motor driven shaft which extends the length of the chamber with a plurality of arms and scrapers attached thereto. 4 to 20 arms may be attached to the shaft depending upon the length of the unit. Two sets of scrapers are normally used, one at each end of the shaft. The finisher may be water cooled, and is provided with a feeding port and discharging lines, usually working by gravity feed. The motor driven shaft and blades are capable of treating the charge of support and precursor materials at a blade tip speed of at least 3.8 to 19 m/s, preferably 12.7 to 17.8 m/s (150 to 750 inches/second, and preferably of at least 500 to 700 inches/second). The finisher can be operated in a batch or continuous mode of operation.

The particulate materials are thus mixed together for a time long enough, and at a temperature high enough, as to cause the particles of the organic support materials to soften and the particles of the catalyst precursor material to become embedded in, and/or adhered to, the softened support materials, but under such conditions of time and temperature as to avoid chemical decomposition of either of these particulate materials. The temperature employed in the mixing operation is that which is essentially caused by the heat of friction which is created during the mixing operation. The temperature must be controlled so as to avoid fusion between individual particles of the support material. No additional heat needs to be added to the composition being mixed, and cooling of the composition being mixed may be used to reduce the

temperature generated. The temperature rise may also be controlled by regulating the tip speed of the blades which regulates frictional heating. The mixing of the two particulate materials is continued until a sticking efficiency of at least 45 weight %, and preferably of 75 to 90 weight % is achieved. This may take about 5 to 100 minutes depending on the size of the charge being treated. The term "sticking efficiency", as used herein, means the weight % of the total amount of the catalyst charge which is adhered to the support.

After the completion of the mixing operation the admixed particles are removed and cooled to room temperature. The resulting particles which have the precursor particles embedded in the support particles are substantially of the same size and shape as the original particles of the support particles.

Olefin polymerization process

Fluid bed reactors suitable for continuously preparing olefin polymers have been previously described and are well known in the art. Fluid bed reactors useful for this purpose are described, e.g., in U.S. Patents 4,302,565 and 4,370,456. Said patents likewise disclose catalyst compositions suitable for preparing such polymers.

Hydrogen may be employed as a chain transfer agent to regulate the melt index of the polymers produced by the process. Generally, the reaction mixture contains hydrogen in an amount sufficient to produce a hydrogen to monomer mol ratio of from 0.01:1 to 0.5:1. In addition to hydrogen, other chain transfer agents may be employed to regulate the melt index of the polymers.

The gaseous reaction mixture should, of course, be substantially free of catalyst poisons, such as moisture, oxygen, carbon monoxide, carbon dioxide and acetylene.

The polymerization process is usually conducted at temperatures of 50 to 100°C, and preferably of 70 to 90°C, and at pressures (as supplied by the feed of gaseous monomer and diluent) of 0.69 to 2.76 MPa (100 to 400 psi) and preferably of 1.04 to 2.07 MPa (150 to 300 psi). Since the polymerization reaction is exothermic, a heat exchanger in the gas recycle lines, or other means, is employed to remove excess heat of reaction.

In order to maintain a viable fluidized bed, the superficial gas velocity of the gaseous reaction mixture through the bed must exceed the minimum flow required for fluidization, and preferably is at least 0.06 m/s (0.2 feet per second) above the minimum flow. Ordinarily the superficial gas velocity does not exceed 1.52 m/s (5.0 feet per second), and most usually no more than 0.76 m/s (2.5 feet per second) is sufficient.

If desired, the supported catalyst precursor composition may be partially activated before it is introduced into the polymerization reactor. The resulting product is a free-flowing solid particulate material which can be readily fed to the polymerization reactor where the activation is completed with additional activator compound which can be the same or a different activator compound.

Alternatively, the supported catalyst precursor composition may, if desired, be completely activated in the polymerization reactor without any prior activation outside of the reactor, in the manner described in U.S. Patent 4,383,095.

The partially activated or totally unactivated supported catalyst precursor composition and the required amount of activator compound necessary to complete activation of the precursor composition are preferably fed to the reactor through separate feed lines. The activator compound may be sprayed into the reactor in the form of a solution thereof in a hydrocarbon solvent such as isopentane, hexane, or mineral oil. This solution usually contains from 2 weight percent to 30 weight percent of the activator compound. The activator compound is added to the reactor in such amounts as to provide, in the reactor, a total activator metal:transition metal molar ratio of from 10:1 to 400:1, preferably from 50:1 to 150:1.

In the continuous gas phase fluid bed process disclosed herein, discrete portions of the partially activated or totally unactivated supported catalyst precursor composition are continuously fed to the reactor, with discrete portions of the activator compound needed to complete the activation of the partially activated or totally unactivated precursor composition, during the continuing polymerization process in order to replace active catalyst sites that are expended during the course of the reaction.

By operating under the polymerization conditions and with the catalyst compositions described herein it is possible to continuously polymerize the olefin monomers, individually, or with each other, in a fluidized bed, to produce solid, particulate olefin polymers without undue reactor fouling. By "continuously polymerize" as used herein is meant the capability of uninterrupted polymerization for weeks at a time, i.e., at least in excess of 168 hours, and usually in excess of 1000 hours, without reactor fouling due to the production of large agglomerations of polymer.

The following Examples are designed to illustrate the compositions and process of the present invention and are not intended as a limitation of upon the scope thereof.

The properties of the catalyst components used, and polymers produced, herein were determined by the following test methods:

| | |
|---|---|
| Density | ASTM D 792<br>A plaque is made and conditioned for one hour at 100°C to approach equilibrium crystallinity. Measurement for density is then made in a density gradient column. |
| Productivity | a sample of the resin product is ashed, and the weight % of ash is determined; since the ash is essentially composed of the catalyst, the productivity is thus the pounds of polymer produced per pound of total catalyst consumed. The amount of metals and halides in the ash are determined by elemental analysis. |
| Average Particle Size | This is calculated from sieve analysis data measured according to ASTM-D-1921 Method A using a 30 to 200 gram sample. Calculations are based on weight fractions retained on the screens. |
| Bulk Density | The resin is poured via a 9.5 mm (3/8") diameter funnel into a 100 ml graduated cylinder to the 100 ml line without shaking the cylinder, and weighed by difference. |
| External Void Volume | A liquid imbibement technique is used to measure the internal void volume (IVV). The external void volume (EVV) is then calculated from the relationship: |

$$EVV = \frac{1}{\text{bulk density}} - \frac{1}{\text{resin density}} - IVV$$

All references to "Groups" of metals made herein are references to metals grouped in accordance with the Mendeleeff Periodic Table of the Elements.

## Examples

### Catalyst precursor composition

The catalyst precursor composition employed in the Examples disclosed below was a ball milled compsition having an average particle size in the range of about 2 to 50 μm. The precursor composition, when used with the activator compounds, was a high activity ethylene polymer catalyst. It was prepared from $TiCl_4$ as the transition metal compound, $MgCl_2$ as a complexing support, and tetrahydrofuran (THF) as a complexing electron donor, and in accordance with the procedures disclosed in Canadian Patent 1,144,300. This precursor composition, chemically, conformed to a composition encompassed by the formula

$$Mg_mTiCl_p[THF]_q$$

wherein

m is ≥5 to ≤200
p is ≥13 to ≤403 and
q is ≥0 to ≤3.0.

### Support material

The support employed in these examples was a solid particulate high pressure low density polyethylene having a melting point of 95°C, a density of 0.93 g/cm$^3$, a bulk density of 0.35 g/cm$^3$ (21.9 lbs/ft$^3$) and an external void volume of 1.39 cm$^3$/g (with an internal void volume of 0.29 cm$^3$/g). The particle size distribution of the particulate support was such that none of it was below 0.09 mm in size. It had a particle size range of 0.09 to 0.15 mm.

### Finishing operation

A charge of the catalyst precursor (70 grams; 35 weight %) and of the support (130 grams; 65 weight %) were charged, at about 25°C and under an inert atmosphere of nitrogen, and in a batch mode of operation, to a 10.2 cm (4") diameter by 15.2 cm (6") long finisher having an internal capacity of about one liter. The finisher was closed and the shaft with four blades was started at 250 inches/second and the temperature of the admixed charge rose to 100°C due to the intense agitation and heat of friction. The speed of the shaft was then lowered, after about 20 minutes to 210 inches/second in order to maintain the temperature of the admixed material at about 100°C. After finishing the charge at 100°C for a total of thirty minutes, the shaft was stopped and the finished material was then discharged from the finisher. The resulting material was in the form of particles having an average particle size of about 100 μm. An electron Diffraction Spectroscopy (EDS) Cl mapping of the finished product indicated that each particle was essentially composed of a support kernel uniformly coated with the precursor composition.

### Polymerization reaction

A finished catalyst precursor prepared as described above was used in the terpolymerization of ethylene ($C_2$), propylene ($C_3$) and hexene-1 ($C_6$) in a gas fluidized bed process with the equipment basically disclosed in U.S. Patents 4,359,561 and 4,363,904 and with a bed capacity of about 0.2 m$^3$ (about 7 cubic feet). The reactor was operated at 85°C and at a space time yield of 3.5 to 5.0, with 0.55 to 0.69 MPa (80—100

psi) ethylene partial pressure, and a gas feed of $C_3$ and $C_6$ at a $C_2$:$C_3$ mol ration of 16:1 and a $C_2$:$C_6$ mol ratio of 11:1. The activator compound used was triethyl aluminum and it was used at an Al:Ti mol ratio of 35 to 50. The activation was conducted in the reactor. The activator was fed to the reactor as a 5 weight % solution in a hydrocarbon diluent, at the rate of about 100 ml/hour.

Catalyst feeder and reactor operation were smooth and continuous as shown by the continuous operation of the reactor for ≥2 days without pluggage of the catalyst feeder or the formation of any discernible sheets or chunks of polymer therein. The polymer product was a terpolymer which had a density of 0.918 g/cm$^3$, a melt flow ratio of 48.0 and a bulk density of 0.28 g/cm$^3$ (17.6 lbs/ft$^3$). The polymer was recovered from the reactor at the rate of about 12.7 kg/h (25 pounds per hour) and at a productivity level of about 1,000,000 pounds of polymer per pound of Ti in the catalyst.

Comparison polymerization reaction

The catalyst precursor, in unfinished unadapted form, was used in an attempt to produce an ethylene-butene-1 copolymer, at a $C_4$/$C_2$ ratio of 0.30 to 0.32, with a density of 0.918 to 0.922 g/cm$^3$, which is a much more simple polymerization process than the terpolymerization process in which the finished, adapted, precursor catalyst composition was used.

The reaction was attempted in a reactor system the same as that used for the terpolymerization reaction. The reactor was operated at 85°C and at a space time yield of 2.3 to 5.3, with 1.38 MPa (200 psi) total reactor pressure. The activator compound used was triethylaluminum, and it was used at an Al:Ti mol ratio of 65. The activation was conducted in the reactor. The activator was fed to the reactor, as a 10 weight % solution in a hydrocarbon diluent.

The reactor, however, had to be shut down after operating less than 24 hours. The operation was very unstable and resulted in the formation of skins and sheets of polymer on the walls of the reactor. This formation of skins and sheets was caused by the migration of the catalyst to the reactor walls and the formation there of catalyst rich molten polymer materials which assumed the form of skins, sheets and chunks. This unstable reactor operation was also characterized by the occurrence of large (∾10 to 20°C) temperature excursions (spikes) and chronic catalyst feeder plugging problems.

**Claims**

1. A multi-component Zielger or Ziegler-Natta type high activity catalyst composition formed from
a) about 50 to 95 weight % of solid inert particulate polymeric hydrocarbon support material, and
b) about 5 to 50 weight % of solid particulate transition metal based low pressure olefin polymerization catalyst precursor,
said catalyst composition having been formed by mixing said a) and b) components together in a high speed bladed finishing device under such friction induced heat conditions as to cause the particulate support material to soften and the particulate catalyst precursor to become embedded in the softened support material.

2. A composition as in claim 1 in which said a) support material is a polyolefin resin, e.g. a polyethylene resin or a polypropylene resin.

3. A composition as in any one of claims 1 to 2 in which said b) catalyst precursor is a Ziegler catalyst precursor.

4. A composition as in any one of claims 1 to 2 in which said b) catalyst precursor is a Ziegler-Natta stereospecific catalyst precursor.

5. A composition as in any one of claims 1 to 4 adapted for use in a gas phase fluidized bed olefin polymerization process.

6. A catalyst composition comprising
a) a catalytic precursor prepared according to any one of claims 1 to 5, and
b) activating quantities of organometallic reducing agent compound, e.g. any one which is based on a Group Ia, IIa or IIIa metal compound.

7. A catalyst composition as in claim 6 in which said b) and a) compounds are used in an atomic ratio of about 10 to 400 based on the primary metal content of said compounds.

8. A process for preparing an olefin polymerization catalyst composition for use in a fluidized bed polymerization process which comprises mixing, in a high speed bladed finishing device
a) about 50 to 95 weight % of solid inert particulate polymeric hydrocarbon support material, and
b) about 5 to 50 weight % of solid particulate transition metal based low pressure olefin polymerization catalyst precursor which is a precursor of a high activity Ziegler or Ziegler-Natta type catalyst, said mixing being conducted under such friction induced heat conditions, and for a period of time, as are sufficient to cause the a) particles of support material to soften, but not to fuse with each other, and the b) particles of catalyst precursor to become embedded in and/or adhered to said a) particles, without causing any deterioration in the chemical nature of either the a) or b) particles.

9. A process as in claim 8 in which said finishing device is operated at a blade tip speed of at least 3.8 m/s (150 inches/second).

10. A process as in claim 8 or 9 which is operated until a sticking efficiency of about at least 45 weight %, e.g. of 75 to 90 weight %, is achieved.

11. A process for catalytically polymerizing one or more olefin monomers in a low pressure gas phase fluidized bed process which comprises polymerizing said monomers in such process with a catalyst as described in one or both of claims 6—7.

**Patentansprüche**

1. Mehrkomponentenkatalysatorzusammensetzung vom Ziegler- oder Ziegler-Natta-Typ hoher Aktivität, gebildet aus

a) etwa 50 bis 95 Gew.-% festem, inertem, feinteiligem, polymerem Kohlenwasserstoff-Trägermaterial und

b) etwa 5 bis 50 Gew.-% eines festen, feinteiligen Niederdruck-Olefin-Polymerisationskatalysatorvorläufers auf der Basis von übergangsmetallen, wobei die Katalysatorzusammensetzung gebildet worden ist, indem man die Komponenten a) und b) zusammen in einer Hochgeschwindigkeits-Abschlußbehandlungs-Rührblatt-Vorrichtung unter solchen durch Reibung induzierten Wärmebedingungen mischt, daß ein Erweichen des feinteiligen Trägermaterials verursacht und der feinteilige Katalysatorvorläufer im erweichten Trägermaterial eingebettet wird.

2. Zusammensetzung nach Anspruch 1, in welcher das Trägermaterial a) ein Polyolefinharz, z.B. ein Polyethylenharz oder ein Polypropylenharz, ist.

3. Zusammensetzung nach irgendeinem der Ansprüche 1 bis 2, in welcher der Katalysatorvorläufer b) ein Ziegler-Katalysatorvorläufer ist.

4. Zusammensetzung nach irgendeinem der Ansprüche 1 bis 2, in welcher der Katalysatorvorläufer ein stereospezifischer Ziegler-Natta-Katalysatorvorläufer ist.

5. Zusammensetzung nach irgendeinem der Ansprüche 1 bis 4, geeignet für die Verwendung in einem Gasphasen-Fließbett-Olefinpolymerisationsverfahren.

6. Katalysatorzusammensetzung, die

a) einen Katalysatorvorläufer, hergestellt nach irgendeinem der Ansprüche 1 bis 5, und

b) aktivierende Mengen einer organometallischen Reduktionsmittelverbindung, z.B. einer solchen auf der Basis einer Verbindung eines Metalls der Gruppe Ia, IIa oder IIIa, umfaßt.

7. Katalysatorzusammensetzung nach Anspruch 6, in welcher die Verbindungen b) and a) in einem Atomverhältnis von etwa 10 bis 400, bezogen auf den primären Metallgehalt dieser Verbindungen, verwendet werden.

8. Verfahren zur Herstellung einer Olefinpolymerisations-Katalysatorzusammensetzung zur Verwendung in einem Fließbett-Polymerisationsverfahren, das das Mischen in einer Hochgeschwindigkeits-Abschlußbehandlungs-Rührblatt-Vorrichtung von

a) etwa 50 bis 95 Gew.-% eines festen, inerten, feinteiligen, polymeren Kohlenwasserstoff-Trägermaterials und

b) etwa 5 bis 50 Gew.-% eines festen, feinteiligen Niederdruck-Olefinpolymerisations-Katalysatorvorläufers auf der Basis von übergangsmetallen, welche ein Vorläufer eines Hochaktivitäts-Katalysators vom Ziegler- oder Ziegler-Natta-Typ ist, wobei das Mischen unter solchen durch Reibung induzierten Wärmebedingungen und für eine Dauer durchgeführt wird, die ausreichen, daß die Teilchen des Trägermaterials a) erweichen, jedoch nicht zusammenschmelzen, und die Teilchen des Katalysatorvorläufers b) in die Teilchen a) eingebettet werden und/oder an diesen haften, ohne daß irgendein Abbau der chemischen Natur der Teilchen a) oder b) bewirkt wird.

9. Verfahren nach Anspruch 8, in welchem die Abschlußbehandlungsvorrichtung mit einer Geschwindigkeit der Flügelspitze von mindestens 3,8 m/s (150 inches/second) betrieben wird.

10. Verfahren nach Anspruch 8 oder 9, das betrieben wird, bis eine Haftwirksamkeit von mindestens etwa 45 Gew.-%, z.B. von 75 bis 90 Gew.-%, erreicht ist.

11. Verfahren zum katalytischen Polymerisieren von einem oder mehreren Olefinmonomeren in einem Niederdruck-Gasphasen-Fließbettverfahren, das das Polymerisieren dieser Monomeren in einem solchen Verfahren mit einem Katalysator umfaßt, wie er in einem oder beiden Ansprüchen 6 bis 7 beschrieben ist.

**Revendications**

1. Composition de catalyseur à haute activité du type de Ziegler ou de Ziegler-Natta à plusieurs composants, formée

a) d'environ 50 à 95% en poids d'une matière de support hydrocarbonée polymérique solide inerte en particules et

b) d'environ 5 à 50% en poids d'un précurseur solide en particules d'un catalyseur de polymérisation d'oléfines à basse pression à base d'un métal de transition, ladite composition de catalyseur ayant été formée par mélange desdits composants a) et b) ensemble dans un dispositif finisseur à palettes à grande vitesse dans des conditions thermiques induites par friction de manière à provoquer le ramollissement de la matière de support en particules et l'enrobage du précurseur de catalyseur en particules dans la matière de support ramollie.

2. Composition suivant la revendication 1, dans laquelle la matière de support a) est une résine polyoléfinique, par exemple une résine polyéthylénique ou une résine polypropylénique.

3. Composition suivant l'une quelconque des revendications 1 ou 2, dans laquelle le précurseur de catalyseur b) est un précurseur de catalyseur de Ziegler.

4. Composition suivant l'une quelconque des revendications 1 ou 2, dans laquelle le précurseur de catalyseur b) est un précurseur de catalyseur stéréospécifique Ziegler-Natta.

5. Composition suivant l'une quelconque des revendications 1 à 4, apte à être utilisée dans un procédé de polymérisation d'oléfines en lit fluidisé, en phase gazeuse.

6. Composition de catalyseur comprenant

a) un précurseur catalytique préparé suivant l'une quelconque des revendications 1 à 5 et

b) des quantités activatrices d'un composé organométallique réducteur, par exemple tout réducteur à base d'un composé de métal du Groupe Ia, IIa ou IIIa.

7. Composition de catalyseur suivant la revendication 6, dans laquelle les composés b) et a) sont utilisés dans un rapport atomique d'environ 10 à 400 sur la base de la teneur en métal primaire desdits composés.

8. Procédé de préparation d'une composition de catalyseur de polymérisation d'oléfines destinée à être utilisée dans un procédé de polymérisation en lit fluidisé, qui consiste à mélanger, dans un dispositif finisseur à palettes à grande vitesse

a) environ 50 à 95% en poids d'une matière de support hydrocarbonée polymérique solide inerte en particules et

b) environ 5 à 50% en poids d'un précurseur solide en particules d'un catalyseur de polymérisation d'oléfines à basse pression à base d'un métal de transition qui est un précurseur d'un catalyseur du type de Ziegler ou du type de Ziegler-Natta à haute activité, ledit mélange étant effectué dans des conditions thermiques induites par friction et pendant une durée qui sont suffisantes pour avoir pour effet que les particules a) de matière de support se ramollissent mais ne s'agglomèrent pas les unes aux autres et que les particules b) de précurseur de catalyseur soient enrobées dans les particules a) et/ou adhèrent à ces dernières, sans provoquer aucune altération de la nature chimique des particules a) ou b).

9. Procédé suivant la revendication 8, dans lequel on fait fonctionner le dispositif finisseur à une vitesse de l'extrémité des palettes d'au moins 3,8 m/s (150 in/s).

10. Procédé suivant la revendication 8 ou 9, qui est mis en oeuvre jusqu'à ce qu'un rendement d'adhérence d'environ au moins 45% en poids, par exemple de 75 à 90% en poids, ait été atteint.

11. Procédé de polymérisation catalytique d'un ou plusieures monomères oléfiniques dans un procédé en lit fluidisé en phase gazeuse à basse pression, qui consiste à polymériser lesdits monomères dans ledit procédé avec un catalyseur tel que décrit dans l'une des revendications 6 et 7 ou dans les deux.